Europäisches Patentamt

European Patent Office

Office européen des brevets

(11) Publication number: 0 343 256
A1

# EUROPEAN PATENT APPLICATION
published in accordance with Art. 158(3) EPC

(21) Application number: 88909841.4

(22) Date of filing: 15.11.88

Data of the international application taken as a basis:

(86) International application number:
PCT/JP88/01150

(87) International publication number:
WO89/05008 (01.06.89 89/12)

(51) Int. Cl.³: G 06 F 3/06

(30) Priority: 18.11.87 JP 291252/87

(43) Date of publication of application:
29.11.89 Bulletin 89/48

(84) Designated Contracting States:
DE FR GB IT

(71) Applicant: FANUC LTD
3580, Shibokusa Aza-Komanba Oshino-mura
Minamitsuru-gun Yamanashi 401-05(JP)

(72) Inventor: SEKI, Masaki
3-15-2-406, Takaido-nishi Suginami-ku
Tokyo 168(JP)

(72) Inventor: TAKEGAHARA, Takashi
256-2, Nishiterakata-cho Hachioji-shi
Tokyo 192-01(JP)

(72) Inventor: SATO, Shuji Fanuc Dai-3 Vira-karamatsu
3527-1, Shibokusa Oshino-mura
Minamitsuru-gun Yamanashi 401-05(JP)

(74) Representative: Billington, Lawrence Emlyn et al,
HASELTINE LAKE & CO Hazlitt House 28 Southampton
Buildings Chancery Lane
London WC2A 1AT(GB)

(54) DATA TRANSFER METHOD.

(57) Keys to operation means (11d) are operated to designate a predetermined file name, which is then transferred to a storage (12). Depending upon the operation of an input execution switch (13a) or an output execution switch (13b), a data input/output device (13) sends an input start instruction or an output start instruction to the data storage (12). When it is the input start instruction, the data storage (12) transfers the data of the designated file name from the operation means to the data input/output device (13). When it is the output start instruction, the data storage (12) stores the data transferred from the data input/output device (13) after said output start instruction as the data of the designated file name.

# FIG. 1

-1-

## DESCRIPTION

DATA TRANSFER METHOD

## Technical Field

This invention relates to a data transfer method and, more particularly, to a data transfer method for transferring file data between a data input/output device not possessing a file designating function and a data storage device equipped with a file management function.

## Background Art

In a system in which a mass storage device such as a hard disk having a file management function is connected to the system host, the arrangement is such that a file name, a data output start command and the data following the command are transmitted by the host, thereby allowing the data to be stored in the mass storage device as a file. Further, it is so arranged that when the host outputs a data input start command along with the designation of a file name, the mass storage device reads out the data (file) corresponding to the designated file name and transmits the same to the host.

Generally, in order for the host to output (store) data to the mass storage device along with a prescribed file name,

(i) a file editing command having the following format is outputted:

ESC & F NAME :

(where ESC & is the start code of the command, F represents a file designation command, NAME represents the file name, and : denotes the end code of the command,;

(ii) a data output start command DC2 is outputted next;

(iii) data to be stored are subsequently outputted in successive fashion; and

(iv) finally, a data output end command DC4 is outputted.

In order for data (a file) having a desired file name to be entered from the mass storage device to the host,

(i) a file editing command having the following format is outputted from the host:

ESC & F NAME :

(ii) if a data input start command DC1 is then outputted,

(iii) the mass storage device subsequently inputs the data (file) having the designated file name to the host and transfers a data input end command DC3 to the host at the end of the data.

In such a system, there are cases where data from a data input/output device (e.g., a paper tape reader/puncher or the like) not possessing a file designating function are stored in the mass storage device as a file or where a predetermined file is outputted from the mass storage device to the data

-3-

input/output device. In cases such as these, the data input/output device is connected to the host and a data transfer is performed via the host, or the data transfer is carried out via a data input/output device specially designed in order to be connected to the mass storage device.

With the conventional method, however, all of the data is exchanged through the host and therefore the latter is monopolized at this time. As a result, the host cannot efficiently perform its primary processing. On the other hand, if the data transfer is performed via the specially designed data input/output device, expense is required for the special design.

Accordingly, an object of the present invention is to provide a data transfer method whereby data can be transferred directly between a data input/output device not possessing a file designating function and a mass storage device possessing a file management function without intervention of a host or a specially designed data input/output device.

Disclosure of the Invention

The present invention relates to a data transfer method for transferring file data between a data storage device equipped with a file management function and a data input output/device not possessing a file designating function. Operating means having a file designating function is provided between the data storage device and the data input/output device, and the operating means is used to designate a predetermined file name and to transfer the file name to the data storage device. Thereafter, an input start command or an output start command is transferred from the data input/output device to the data storage device by operating an input/output execute switch. When the input start command has been transferred thereto, the data storage device transfers the data of the file name designated by the operating means to the data input/output device. When the output start command has been transferred thereto, the data storage device stores the data, which are transferred from the data input/output device following the output start command, as data of the file name designated by the operating means.

Brief Description of the Drawings

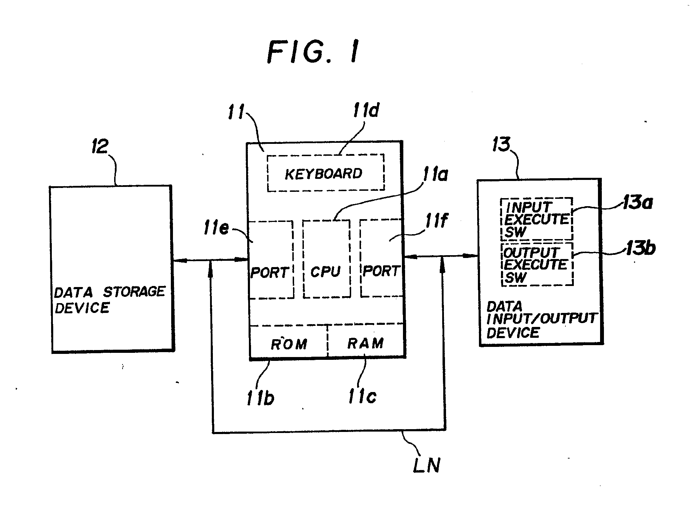

Fig. 1 is a block diagram of a system for practicing the data transfer method of the present invention.

Best Mode for Carrying Out the Invention

Fig. 1 is a block diagram of a system for practicing the data transfer method of the present invention.

Numeral 11 denotes a computerized host apparatus, 12 a data storage device (e.g., a hard disk), and 13 a data input/output device (e.g., a paper tape reader/puncher, etc.). In the host apparatus 11, numeral 11a denotes a CPU, 11b a ROM storing control

-5-

software, 11c a working RAM, 11d a keyboard serving as operating means, and 11e, 11f serial data transfer ports in accordance with RS-232-C. In the data input/output device 13, numeral 13a denotes an input execute switch for requesting a data input from the data storage device, and 13b an output execute switch for requesting a data output to the data storage device.

A case (data output) will now be described in which data are transferred from the data input/output device (e.g., a paper tape reader/puncher, etc.) 13 to the data storage device 12, as well as a case (data input) in which data are transferred from the data storage device 12 to the data input/output device 13.

(a) DATA OUTPUT PROCESSING

In the case of data output, the operator operates the keyboard 11d to designate the port 11e connected to the data storage device 12. For example, if the identification number of port 11e is "1" and that of port 11f is "2", "P1" is keyed in to designate the port 11e. In response, the CPU 11a within an operator's panel stores "1" at a specific address of the RAM 11c in accordance with the control software (ROM) 11b.

Next, the operator keys in a file name from the keyboard 11d and presses the execute key. For example, if the file name is "FILE 1", the keyboard 11d is operated to key in "N = FILE 1", after which the execute key is pressed. When this is done, the CPU 11a

stores the entered file name in the RAM 11c and transfers the file name to the data storage device 12 via the port 11e following a file designating command. That is, the CPU 11a outputs a file designating command having the following format to the data storage device 12 via the port 11e in the form of an ASCII code:

ESC& F FILE1 :

(where "ESC&" a starting code of the command, "F" a file designating command, "FILE1" a file name, and ":" an end code of the command). The data storage device 12 stands by until the data of the file name "FILE1" is transferred from the data input/output device 13 by the file designating command "ESC& F FILE1 :".

Next, when the operator operates the output execute switch 13b in the data input/output device 13, the latter outputs a write start command (e.g., "DC2") directly to the data storage device 12 via a line LN in the form of an ISO code. Thereafter, the data input/output device 13 successively outputs the data and finally outputs a write end command (e.g., "DC4").

Upon receiving the write start command ("DC2"), the data storage device 12 stores the data transferred following the write start command ("DC2"), and stores data, received in accordance with the write end command ("DC4), as the data of the file name "FILE1".

(b) DATA INPUT PROCESSING

A case will now be described in which data indicative of a predetermined file name is entered in the data input/output device (paper tape reader/puncher) from the data storage device 12.

As in the case of data output, the operator designates the port 11e and then keys in the file name and operates the execute key. When this is done, the CPU 11a outputs the file designating command to the data storage device 12 through the port 11e. Next, when the operator operates the input execute switch 13a in the data input/output device 13, the data input/output device 13 transfers a data input start command (e.g., "DC1") to the data storage device 12 via the line LN. In response, the data storage device 12 successively transfers the data of the designated file name to the data input/output device and finally transfers a data input end command (e.g., "DC3"), which indicates the end of data, to the data input device to terminate data input processing.

Thus, in accordance with the present invention, operating means such as a keyboard is connected between a data storage device having a file management function and a data input/output device not having a file designating function, and a file name is transferred from the operating means to the data storage device instead of the data input/output device. This makes it possible to perform a data transfer without specially designing the data input/output device and without the intervention of the host. As a result, the overall processing efficiency of the system can be improved.

CLAIM:

1.  A method of transferring data between a data storage device equipped with a file management function and a data input output/device not possessing a file designating function, characterized by:

   providing operating means having a file designating function between the data storage device and the data input/output device;

   designating a predetermined file name and transferring said file name to said data storage device using said operating means;

   said data input/output device thereafter transferring an input start command or an output start command to said data storage device by operation of an input/output execute switch in said data input/output device;

   said data storage device transferring data of said designated file name to said data input/output device if the command is the input start command; and

   if the command is the output start command, said data storage device storing, as data of said designated file name, data transferred from said data input/output device following said output start command.

# FIG. 1

DATA STORAGE DEVICE

KEYBOARD

PORT  CPU  PORT

ROM  RAM

DATA INPUT/OUTPUT DEVICE

INPUT EXECUTE SW

OUTPUT EXECUTE SW

LN

# INTERNATIONAL SEARCH REPORT

**0343256**

International Application No  PCT/JP88/01150

## I. CLASSIFICATION OF SUBJECT MATTER (If several classification symbols apply, indicate all) ⁶

According to International Patent Classification (IPC) or to both National Classification and IPC

Int.Cl⁴    G06F3/06

## II. FIELDS SEARCHED

### Minimum Documentation Searched ⁷

| Classification System | Classification Symbols |
|---|---|
| IPC | G06F3/06, G06K1/18 |

### Documentation Searched other than Minimum Documentation to the Extent that such Documents are Included in the Fields Searched ⁸

| | |
|---|---|
| Jitsuyo Shinan Koho | 1971 – 1988 |
| Kokai Jitsuyo Shinan Koho | 1971 – 1988 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| A | JP, A, 58-207161 (Mitsubishi Electric Corporation) 2 December 1983 (02. 12. 83) (Family: none) | 1 |

* Special categories of cited documents: ¹⁰

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| November 22, 1988 (22. 11. 88) | December 5, 1988 (05. 12. 88) |

| International Searching Authority | Signature of Authorized Officer |
|---|---|
| | |